# EUROPÄISCHE PATENTSCHRIFT

(11) **EP 0 663 670 B1**
(45) Veröffentlichungstag und Bekanntmachung des Hinweises auf die Patenterteilung: **27.11.1996**
(21) Anmeldenummer: 95200029.7
(22) Anmeldetag: 09.01.1995
(51) Int. Cl.: G21B 1/00, H05H 1/12

(54) **Verfahren zur Herstellung einer Kühleinrichtung**
Method for setting-up a cooling system
Procédé de réalisation d'un dispositif de refroidissement

(30) Priorität: 17.01.1994 AT 66/94
(43) Veröffentlichungstag der Anmeldung: 19.07.1995
(73) Patentinhaber: PLANSEE Aktiengesellschaft, 6600 Reutte, Tirol (AT)
(72) Erfinder: Rainer, Florian, A-6600 Lechaschau (AT); Reheis, Nikolaus, A-6460 Jerzens 10 (AT)
(74) Vertreter: Lohnert, Wolfgang, Dr.

(56) Entgegenhaltungen:
- EP-A- 0 142 673
- WO-A-93/13636
- US-A- 5 023 043
- PATENT ABSTRACTS OF JAPAN vol. 016 no. 271 (E-1218) ,18.Juni 1992 & JP-A-04 065041 (MEIDENSHA CORP) 2.März 1992,
- DATABASE WPI Week 8025 Derwent Publications Ltd., London, GB; AN 80-f3931c & DD-A-140 798 (H.U. TSCHIRNER) , 27.März 1980
- FUSION ENGINEERING AND DESIGN, Bd. 9, Mai 1989 AMSTERDAM NL, Seiten 295-300, GOTOH ET AL. 'High heat load tests of a graphite armor first wall with a water cooling jacket'
- PROCEEDINGS OF THE 14TH IEEE/NPSS SYMPOSIUM ON FUSION ENGINEERING, Bd. 1, SAN DIEGO, CA - 30 SEPT./3 OCT. 1991, Seiten 350-356, XP 000453528 SCHLOSSER ET AL. 'Development of high thermal flux components for continuous operation in tokamaks'
- FUSION ENGINEERING AND DESIGN, Bd. 1,Nr. 15, Juli 1991 Seiten 31-38, XP 000225759 IOKI K ET AL 'DEVELOPMENT OF HIGH CONDUCTIVE C/C COMPOSITE TILES FOR PLASMA FACING ARMOR'
- PATENT ABSTRACTS OF JAPAN vol. 013 no. 591 (M-913) ,26.Dezember 1989 & JP-A-01 249288 (TOSHIBA CORP) 4.Oktober 1989,

## Beschreibung

Die Erfindung betrifft ein Verfahren zur Herstellung einer Kühleinrichtung, bestehend aus einem oder mehreren hitzebeständigen Teilen aus Graphit, Keramik, metallischen Werkstoffen mit einem Schmelzpunkt über 1600°C oder Werkstoffverbunden dieser Materialien und mindestens einer, mit diesen Teilen verbundenen, metallischen Kühlmittelleitung.

Ein typisches Beispiel für derartige Kühleinrichtungen sind Divertor und Limiter für Fusionsreaktoren, wie sie beispielsweise in der DE-PS 34 16 843 beschrieben sind. Entsprechend dieser Ausführung von Hitzeschilden wird für die Teile aus hitzebeständigem Material vorzugsweise Graphit verwendet, die mit den Kühlmittelleitungen, die vorzugsweise aus Molybdän hergestellt werden, durch eine Lötverbindung verbunden sind. Als Lotwerkstoff werden dazu Silber-Kupfer-Basislote verwendet, die den hohen Temperaturbeanspruchungen an die Lötverbindung in ausreichender Weise genügen.

Nachteilig dabei ist, daß für die Kühlmittelleitungen, die für einen guten Wärmeübergang möglichst dünnwandig ausgeführt sein sollen, praktisch nur relativ teure Werkstoffe wie Molybdän oder Molybdän-Legierungen eingesetzt werden können. Die Verwendung von kostengünstigeren Werkstoffen mit guter Wärmeleitfähigkeit würde beträchtliche Nachteile mit sich bringen. Bei Kupfer oder Kupferlegierungen beispielsweise ergibt sich das Problem, daß die zur Lötung verwendeten Silber-Kupfer-Basislote ein tiefschmelzendes Eutektikum mit dem Kupfer bzw. der Kupferlegierung bilden, was zu einem Anschmelzen bzw. mitunter sogar lokalen Auflösen der Kühlmittelleitung beim Lötvorgang führt. Bei Nickel-Eisen- oder Nickel-Eisen-Kobalt-Legierungen hingegen kann es insbesondere bei starker thermischer Wechselbelastung zu Materialrissen kommen, die die Lebensdauer der Kühleinrichtung herabsetzt.

Die EP-A1-59 960 betrifft eine Kühleinrichtung für Hochöfen, bei der die Kühlelemente aus Gußstahl mit Kühlmittelleitungen aus Stahl dadurch verbunden werden, daß die fertig geformten Kühlmittelleitungen mit dem flüssigen Stahl für die Kühlelemente in einer geeigneten Form umgossen werden. Um ein Schmelzen der Kühlmittelleitungen zu verhindern, sind die Kühlmittelleitungen an der Oberfläche mit einer Beschichtung aus Keramik oder Zirkon versehen.

In der US-PS 4 532 101 ist ein Limiterelement mit drei Abschnitten für einen Fusionsreaktor beschrieben. Die einzelnen Abschnitte bestehen aus einem festen Trägerteil an dem mehrere mit Titankarbid beschichtete Graphitplatten mechanisch befestigt sind. Das Trägerteil besteht aus rostfreiem Stahl und ist mit ebenfalls aus einer Stahllegierung bestehender Kühlmittelleitung verlötet.

Aufgabe der vorliegenden Erfindung ist es daher ein Verfahren zur Herstellung einer Kühleinrichtung zu schaffen, das die Kühlmittelleitungen erlaubt und das eine Verbindung zwischen den Teilen aus hitzebeständigem Material und den Kühlmittelleitungen ergibt, die den im Betrieb auftretenden hohen Temperaturbeanspruchungen, insbesondere auch bei zyklischer Belastung, ohne Ausbildung wesentlicher schädlicher Materialrisse standhält.

Erfindungsgemäß wird dies dadurch erreicht, daß das Metall der Kühlmittelleitung in schmelzflüssigem Zustand mit den hitzebeständigen Teilen in Kontakt gebracht wird, wobei während dieses Verbindungsvorganges im Kontaktbereich Anteile von einem oder mehreren Metallen der IV. und/oder V. Nebengruppe des Periodensystemes der Elemente bereitgestellt werden und daß danach das Metall der Kühlmittelleitung in der gewünschten Form durch Abkühlung verfestigt wird.

Auf diese Art und Weise wird ein hervorragender Verbund zwischen den Teilen aus hitzebeständigem Material und der metallischen Kühlmittelleitung erreicht. Die Anwesenheit von Anteilen von mindestens einem Metall der IV. Nebengruppe Titan, Zirkon, Hafnium und/oder V. Nebengruppe Vanadium, Niob, Tantal im Kontakt- bzw. Verbindungsbereich garantiert eine ausgezeichnete Benetzung der Teile aus hitzebeständigem Material mit der Schmelze aus dem Metall der Kühlmittelleitung. Da die Ausbildung der Kühlmittelleitung erfindungsgemäß durch Erstarrung der Schmelze in der endgültigen gewünschten Form erfolgt, werden die Probleme des Anlegierens der Kühlmittelleitungen durch das Lot, wie sie bei der Verlötung der Kühlmittelleitungen mit den Teilen aus hitzebeständigem Material auftreten würden, vollständig vermieden.
Als Materialien für die hitzebeständigen Teile sind beispielsweise Graphit, Beryllium, aber auch keramische Werkstoffe wie SiC, TiC, TiB₂ und B₄C geeignet. Für die Kühlmittelleitung eignen sich Werkstoffe wie Kupfer und Kupferlegierungen, aber auch Eisen-, Nickelguß- und Stahllegierungen.
Das bzw. die Metalle der IV. und/oder V. Nebengruppe können beispielsweise als Zwischenschicht zwischen die Kontaktflächen der Teile aus hochschmelzendem Metall mit den metallischen Kühlmittelleitungen eingebracht werden. Die Zwischenschicht kann durch Beschichten eines oder beider der zu verbindenden Werkstoffe, aber auch durch Anordnung in Form einer Folie hergestellt werden. Als Beschichtungsverfahren sind beispielsweise galvanische Verfahren aber auch CVD- und PVD-Verfahren geeignet. Als Dicke für die Zwischenschicht haben sich Stärken zwischen 10 und 50 µm bewährt.
Ebenso ist es denkbar, daß das bzw. die Metalle der IV. und/oder V. Nebengruppe bereits als Legierungselemente im Metall der Kühlmittelleitung vorhanden sind. Dies ist insbesondere dann von Vorteil, wenn die metallischen Kühlmittelleitungen durch Hintergießen der Teile aus hitzebeständigem Material in geeigneten Gußvorrichtungen hergestellt werden.
Als besonders vorteilhaft hat es sich bewährt, Titan als Metall der IV. Nebengruppe zu verwenden, welches eine besonders gute Benetzung der hochschmelzenden Teile durch das schmelzflüssige Metall der Kühlmittelleitung gewährleistet.

Es ist desweiteren vorteilhaft, das Metall der IV. und/oder V. Nebengruppe als Folie zwischen die Teile aus hitzebeständigem Material und die vorerst festen metallischen Kühlmittelleitungen einzubringen und danach den gesamten Verbund bis zur Verflüssigung der Kühlmittelleitung zu erhitzen. Als Foliendicke hat sich dabei eine Stärke zwischen 10 und 50 µm bewährt. Die dünne Metallfolie wird innerhalb kurzer Zeit von der Schmelze des Metalles der Kühlmittelleitung aufgelöst und die derart entstandene Legierung benetzt und infiltriert die Kontaktflächen der hitzebeständigen Teile. Nach dem Erstarren der Legierung für die Kühlmittelleitung in der gewünschten Endform entsteht eine feste, stabile, stoffschlüssige Verbindung zwischen Kühlmittelleitung und den Teilen aus hochschmelzendem Material.

Als besonders vorteilhaft hat sich das erfindungsgemäße Verfahren bei der Verwendung von CFC-Graphit als Material für die hochtemperaturbeständigen Teile und der Verwendung von Kupfer bzw. einer Kupferlegierung für die Kühlmittelleitungen bewährt.

Eine besonders gute Verbindung zwischen den Teilen aus hitzebeständigem Material und den metallischen Kühlmittelleitungen wird erreicht, wenn die Teile aus hitzebeständigem Material an ihrer Kontaktoberfläche zu den metallischen Kühlmittelleitungen durch Bohrungen, die mittels Laser eingebracht werden, strukturiert sind.

Im folgenden wird die Erfindung anhand eines Herstellungsbeispieles näher erläutert.

### BEISPIEL:

Ein "single tube"-Divertor für Fusionsreaktoren wurde wie folgt hergestellt:
Ein prismatischer Teil aus faserverstärktem Graphit mit den Abmessungen 175 x 40 x 36 mm wird mit einer in Längsrichtung durchgehenden Bohrung mit 16 mm Durchmesser versehen. Danach wurde die Bohrungsoberfläche durch Einbringung von senkrecht zur Oberfläche verlaufende Bohrungen von etwa 100 µm Durchmesser mittels Laser aufgerauht. Nach Reinigung des Graphitteiles wurde dieser im Vakuum bei 1200°C während 60 Minuten geglüht.
Die Bohrungsoberfläche wurde vollflächig mit einer 20 µm starken Titan-Folie ausgelegt. Anschließend wurde ein ultraschallgereinigtes Kupferrohr mit 1 mm Wandstärke, das formschlüssig an der Titan-Folie anliegt, in die Bohrung eingebracht. In das Innere des Kupferrohres wurde ein formschlüssiger Graphitkern eingeschoben. Die Anordnung wurde auf einer Grundplatte zentriert und fixiert und unter Vakuum in einem induktiv beheizten Ofen auf 1150°C isotherm erhitzt. Nach einer Haltezeit von etwa 20 Minuten wurde die Induktionsspule motorisch aus der Heizzone bewegt, um eine kontrolliert gerichtete Erstarrung zu ermöglichen. Nach dem Abkühlen und dem Ausbauen aus der Induktionsanlage wurde der innere Graphitkern ausgebohrt.
Der derart hergestellte Divertor wurde durch zerstörungsfreie Prüfmethoden (Ultraschallprüfung, Röntgenradiographie, Lecktest, Drucktest) geprüft. Es wurden keinerlei Fehler festgestellt.
Die an den Graphit angrenzende Randzone des Kupferrohres war als Titankarbidschicht ausgebildet.
Der derart hergestellte Divertor wurde einem thermomechanischen, zyklischen Belastungstest unterzogen. Während einer Aufheizzeit von 1 min wurde der Divertor im Hochvakuum auf 600°C aufgeheizt und danach während 15 min auf Raumtemperatur abgekühlt.

Nach 100 Zyklen zeigte eine zerstörungsfreie und eine zerstörende Prüfung des Divertors den einwandfreien Zustand der Verbindung des hitzebeständigen Graphitteiles mit dem Kupferrohr.

Die Erfindung wurde am Beispiel eines Hitzeschildes für Fusionsreaktoren näher erläutert, sie ist aber keinesfalls auf diese Anwendung beschränkt. Die Erfindung kann ebenfalls auf andere Kühleinrichtungen, wie beispielsweise gekühlte Ziehmatrizen zum Herstellen von Profilstäben, gekühlte Elektroden für die Schmelzelektrolyse und dergleichen angewendet werden.
Desgleichen ist die Anwendung der Erfindung keinesfalls auf bstimmte geometrische Ausgestaltungen beschränkt. Insbesondere ist die Ausgestaltung der Kühlmittelleitungen nicht auf zylindrische Rohre beschränkt. Auch können sowohl ein als auch mehrere Teile aus hitzebeständigem Material sowohl mit einer als auch mit mehreren metallischen Kühlmittelleitungen ganz oder auch nur teilweise verbunden sein.

## Patentansprüche

1. Verfahren zur Herstellung einer Kühleinrichtung, bestehend aus einem oder mehreren hitzebeständigen Teilen aus Graphit, Keramik, metallischen Werkstoffen mit einem Schmelzpunkt über 1600°C, oder Werkstoffverbunden dieser Materialien und mindestens einer, mit diesen Teilen verbundenen, metallischen Kühlmittelleitung,
**dadurch gekennzeichnet,**
daß das Metall der Kühlmittelleitung in schmelzflüssigem Zustand mit den hitzebeständigen Teilen in Kontakt gebracht wird, wobei während dieses Verbindungsvorganges im Kontaktbereich schmelzflüssige Anteile von einem oder mehreren Metallen der IV. und/oder V. Nebengruppe des Periodensystems der Elemente bereitgestellt werden und daß danach das Metall der Kühlmittelleitung in der gewünschten Form durch Abkühlung verfestigt wird.

2. Verfahren zur Herstellung einer Kühleinrichtung nach Anspruch 1, dadurch gekennzeichnet, daß das Metall der IV. Nebengruppe Titan ist.

3. Verfahren zur Herstellung einer Kühleinrichtung nach Anspruch 1 oder 2, dadurch gekennzeichnet, daß das Metall der IV. und/oder V. Nebengruppe als Folie zwischen die Kontaktflächen der Teile aus hitzebeständigem Material und der vorerst festen metallischen Kühlmittelleitung eingebracht wird und daß danach der gesamte Verbund bis zur Verflüssigung der Kühlmittelleitung und der Folie erhitzt wird.

4. Verfahren zur Herstellung einer Kühleinrichtung nach einem der Ansprüche 1 bis 3, dadurch gekennzeichnet, daß das hitzebeständige Material CFC-Graphit und das Metall der Kühlmittelleitung Kupfer bzw. eine Kupferlegierung ist.

5. Verfahren zur Herstellung einer Kühleinrichtung nach einem der Ansprüche 1-4, dadurch gekennzeichnet, daß die Teile aus hitzebeständigem Material an ihrer Kontaktoberfläche zu den metallischen Kühlmittelleitungen durch Bohrungen die mittels Laser eingebracht werden, strukturiert sind.

## Claims

1. Method of manufacturing a cooling device, comprising one ( or more heat-resistant parts made of graphite, ceramic material, metal materials with a melting point over 1600°C or composites of said materials and at least one metal coolant line connected to said parts,
characterized in
that the metal of the coolant line is brought, in a molten state, into contact with the heat-resistant parts, molten components of one or more metals of the fourth and/or fifth auxiliary group of the periodic system of elements being supplied during said combination process in the contact region, and that subsequently the metal of the coolant line is hardened in the desired shape by cooling.

2. Method of manufacturing a cooling device according to claim 1, characterized in that the metal of the fourth auxiliary group is titanium.

3. Method of manufacturing a cooling device according to claim 1 or 2, characterized in that the metal of the fourth and/or fifth auxiliary group is introduced as a foil between the contact surfaces of the parts made of heat-resistant material and the initially solid metal coolant line and that subsequently the entire composite is heated until the coolant line and the foil liquefy.

4. Method of manufacturing a cooling device according to one of claims 1 to 3, characterized in that the heat-resistant material is CFC graphite and the metal of the coolant line is copper or a copper alloy.

5. Method of manufacturing a cooling device according to one of claims 1 to 4, characterized in that the parts made of heat-resistant material are textured at their surface contacting the metal coolant lines by means of holes which are introduced by means of lasers.

## Revendications

1. Procédé pour la fabrication d'un dispositif de refroidissement, constitué d'une ou plusieurs pièces réfractaires en graphite, céramique, matières métalliques présentant un point de fusion supérieur à 1600 °C ou en des matières composites à base de ces matériaux et d'au moins une conduite métallique du circuit de refroidissement raccordée à ces pièces
**caractérisé en ce que**
le métal de la conduite du produit de refroidissement est amené en contact, à l'état de fusion, avec les pièces réfractaires, des portions en fusion d'un métal ou de plusieurs métaux du groupe V. et/ou V. de la classification périodique des éléments étant apprêtées pendant ce processus de liaison, et en ce que, ensuite, le métal de la conduite du produit de refroidissement est solidifié sous la forme désirée par refroidissement.

2. Procédé pour la fabrication d'un dispositif de refroidissement selon la revendication 1, caractérisé en ce que le métal du groupe IV. est du titane.

3. Procédé pour la fabrication d'un dispositif de refroidissement selon la revendication 1 ou 2, caractérisé en ce que le métal du groupe IV. et/ou V. est rapporté sous la forme d'une feuille disposée entre les surfaces de contact des pièces en matériau réfractaire et la conduite du produit de refroidissement métallique qui est tout d'abord sous forme solide et en ce que, ensuite, l'ensemble de la liaison est chauffé jusqu'à la fusion de la conduite du produit de refroidissement et de la feuille.

4. Procédé pour la fabrication d'un dispositif de refroidissement selon l'une quelconque des revendications 1 à 3, caractérisé en ce que le métal réfractaire est du graphite CFC et le métal de la conduite du produit de refroidissement est un alliage de cuivre.

5. Procédé pour la fabrication d'un dispositif de refroidissement selon l'une quelconque des revendications 1 à 4, caractérisé en ce que les pièces en matériau réfractaire sont conformées, sur leurs surfaces de contact dirigées vers les conduites métalliques du circuit de refroidissement, avec des perçages qui sont réalisés au moyen de lasers.
